# FASCICULE DE BREVET EUROPEEN

(11) **EP 0 829 385 B1**
(45) Date de publication et mention de la délivrance du brevet: **01.08.2001**
(21) Numéro de dépôt: 97402127.1
(22) Date de dépôt: 12.09.1997
(51) Int. Cl.: B60J 10/12, B60J 10/08

(54) **Dispositif d'étanchéité entre deux éléments et ouvrant de véhicule automobile équipé d'un tel dispositif d'étanchéité**
Abdichtungsvorrichtung zwischen zwei Elementen und Kraftfahrzeugdach mit einer solchen Abdichtungsvorrichtung
Sealing arrangement between two elements and vehicle roof provided with such sealing arrangement

(30) Priorité: 17.09.1996 FR 9611330
(43) Date de publication de la demande: 18.03.1998
(73) Titulaire: AUTOMOBILES PEUGEOT, 75116 Paris (FR); AUTOMOBILES CITROEN, 92200 Neuilly-sur-Seine (FR)
(72) Inventeur: Kharat, Stéphane, 75015 Paris (FR)
(74) Mandataire: Lanceplaine, Jean-Claude

(56) Documents cités:
- EP-A- 0 483 758
- DE-A- 3 909 277
- DE-U- 29 509 880
- FR-A- 2 599 677
- PATENT ABSTRACTS OF JAPAN vol. 12, no. 336 (M-739) [3183] , 9 septembre 1988 & JP 63 097449 A (NISSAN MOTOR), 28 avril 1988,

## Description

La présente invention conceme un dispositif d'étanchéité entre deux éléments, notamment d'une carrosserie d'un véhicule automobile et concerne également un ouvrant de véhicule automobile équipé d'un tel dispositif d'étanchéité.

Dans de nombreuses applications, il est nécessaire d'assurer l'étanchéité entre différents éléments, comme par exemple entre un élément fixe et un élément mobile ou entre deux éléments mobiles.

C'est le cas notamment des véhicules automobiles où une étanchéité doit être réalisée entre les différents éléments composant la carrosserie et plus particulièrement entre les portes, les portes et les ailes adjacentes et entre le toit ouvrant et le pavillon du véhicule.

Jusqu'à présent pour réaliser ce type d'étanchéité, plusieurs dispositifs sont utilisés.

L'un de ces dispositifs est formé par un profilé en élastomère fixé par encliquetage ou emboîté sur un des éléments de la carrosserie.

Mais, ce dispositif nécessite un aménagement particulier des éléments de la carrosserie afin que l'étanchéité puisse être réalisée par ce seul profilé.

On connaît dans le brevet DE-A-3 909 277 un enjoliveur de bas de porte d'un véhicule à la partie basse duquel est fixé un joint qui permet d'éviter le passage de l'eau et de la poussière dans l'habitacle ainsi que les vibrations de cet enjoliveur quand la porte est fermée brutalement ou quand le véhicule roule sur une route bosselée.

L'enjoliveur présente une section constante sur toute sa longueur et est parallèle à l'élément de la carrosserie avec lequel on réalise l'étanchéité ce qui permet d'y monter un joint extrudé.

On connaît également dans le brevet JP-A-63 097449, comportant les caractéristiques du préambule de la revendication 1, un dispositif d'étanchéité entre deux éléments, notamment d'une carrosserie d'un véhicule automobile, comprenant un joint en élastomère extrudé formé par une première partie d'étanchéité entre les deux éléments et une seconde partie d'accrochage sur une armature destinée à être reliée à l'un desdits éléments. En coupe transversale, l'armature comporte des portions de différentes dimensions en fonction du profil des éléments entre lesquels l'étanchéité est à réaliser.

Mais dans ce cas aussi, l'armature présente une section constante sur toute sa longueur.

Un autre dispositif est, lorsque les éléments ne permettent pas l'implantation d'un profilé simple, formé par une pièce comportant une partie en élastomère moulée réalisant l'étanchéité et une armature métallique ou en matière plastique moulée et enrobée par l'élastomère, permettant l'accrochage sur l'un des éléments.

Mais, le surmoulage de l'élastomère sur l'armature augmente l'épaisseur de cette armature et de ce fait l'encombrement du dispositif d'étanchéité ainsi que le coût de ce dispositif.

L'invention a pour but d'éviter ces inconvénients en proposant un dispositif d'étanchéité simple et peu coûteux et présentant un encombrement faible permettant son implantation dans des espaces réduits.

L'invention a donc pour objet un dispositif d'étanchéité entre deux éléments, notamment d'une carrosserie d'un véhicule automobile, comprenant un joint en caoutchouc extrudé comprenant une première partie d'étanchéité entre les deux éléments et une seconde partie d'accrochage sur une armature et destinée à être reliée à l'un desdits éléments, ladite armature comportant, sur sa longueur, des portions de sections variables en fonction du profil des éléments entre lesquels l'étanchéité est à réaliser.

Selon d'autres caractéristiques de l'invention :
- l'armature est en matière plastique moulée ou en métal embouti ou en métal profilé,
- l'armature comporte des moyens de fixation sur l'élément correspondant,
- les moyens de fixation sont formés par des organes d'encliquetage venus de matière avec ladite armature et coopérant avec des orifices ménagés dans l'élément correspondant,
- l'armature comporte, à chacune de ses extrémités, une butée de maintien du joint,
- le joint comporte des moyens d'emboîtement sur l'armature,
- les moyens d'emboîtement sont formés par un logement ménagé dans la seconde partie du joint et coopérant avec une partie mâle de forme complémentaire audit logement et ménagée sur l'armature,
- le joint comporte un rebord en saillie assurant le contact avec l'élément de support de ladite armature,
- le joint est recouvert d'un vernis glissant.

L'invention a également pour objet un ouvrant de véhicule automobile, caractérisé en ce qu'il est équipé d'un dispositif d'étanchéité tel que mentionné ci-dessus.

Les caractéristiques et avantages de l'invention apparaîtront à la lecture de la description qui va suivre, donnée uniquement à titre d'exemple et faite en référence aux dessins annexés, sur lesquels :
- La figure 1 est une vue schématique en perspective du dispositif d'étanchéité selon l'invention,
- La figure 2 est une vue schématique en coupe transversale du dispositif d'étanchéité disposé entre deux éléments, par exemple d'une carrosserie d'un véhicule automobile,
- La figure 3 est une vue schématique en perspective d'une variante de l'armature du dispositif d'étanchéité selon l'invention,
- Les figures 4, 5, 6 et 7 sont des vues schématiques en coupe transversale, respectivement selon les lignes 4-4, 5-5, 6-6 et 7-7 de la figure 4.

Ainsi que représenté sur les figures, le dispositif selon l'invention désigné dans son ensemble par la référence 10 est destiné à assurer l'étanchéité entre deux éléments, respectivement 1 et 2, comme par exemple entre un élément fixe et un élément mobile ou entre deux éléments mobiles.

Le dispositif d'étanchéité 10 comprend un joint 11 en élastomère extrudé et de préférence en caoutchouc extrudé comportant une première partie 12 d'étanchéité entre les deux éléments 1 et 2 et une seconde partie 13 d'accrochage sur une armature 14 destinée à être reliée à l'un desdits éléments 1 ou 2.

La première partie 12 du joint 11 est en caoutchouc cellulaire et la seconde partie 13 est en caoutchouc compact.

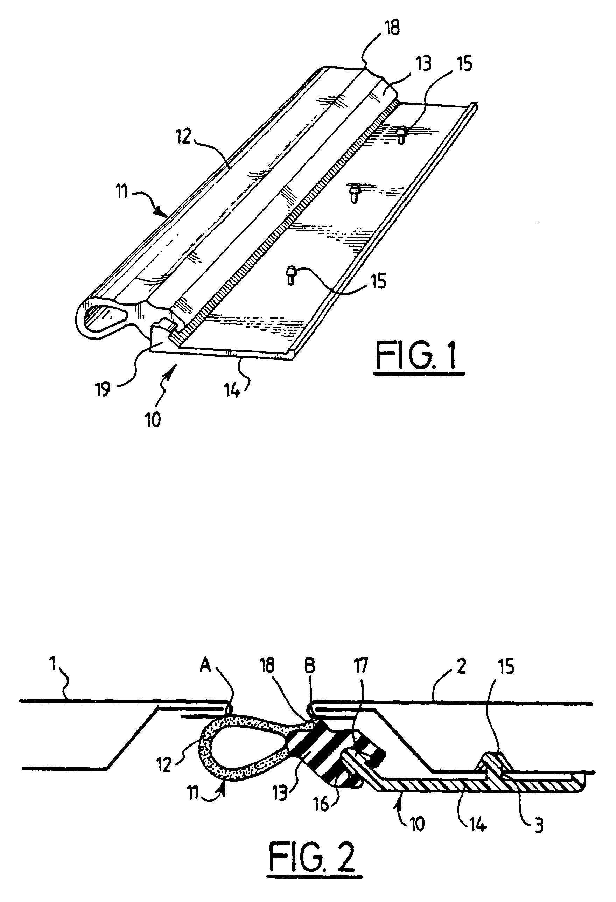

Dans l'exemple de réalisation représenté à la figure 2, l'armature 14 est reliée à l'élément 2.

La première partie 12 du joint 11 est, dans l'exemple de réalisation représenté à la figure 2, formé par un bourrelet creux.

Cette première partie 12 du joint 11 peut également être formée par un bourrelet plein.

L'armature 14 est de préférence en matière plastique moulée, mais peut être également réalisée en métal embouti ou en métal profilé.

Ainsi que représenté sur les figures, l'armature 14 comporte des moyens de fixation sur l'élément 2 qui sont constitués par des organes d'encliquetage 15 venus de matière avec ladite armature 14 et coopérant avec des orifices 3 ménagés dans l'élément 2.

Selon des variantes, les moyens de fixation de l'armature 14 sur l'élément 2 peuvent être constitués par des organes d'encliquetage rapportés sur ladite armature 14 ou encore par des rivets.

Les organes d'encliquetage sont uniformément répartis sur toute la longueur de l'armature 14.

Ainsi que représenté à la figure 2, le joint 11 comporte des moyens d'emboîtement sur l'armature 14 qui sont constitués par un logement 16 ménagé dans la seconde partie 13 dudit joint et coopérant avec une partie mâle 17 de forme complémentaire audit logement 15 et ménagée sur ladite armature 14.

D'autre part, le joint 11 comporte un rebord 18 en saillie assurant le contact avec l'élément 2 qui supporte l'armature 14.

Comme représenté à la figure 1, l'armature 14 comporte, à chacune de ses extrémités, une butée 19 afin d'éviter un coulissement intempestif du joint 11 par rapport à l'armature 14.

Enfin, le joint 11 est recouvert d'un vernis glissant afin d'optimiser le débattement de ce joint 11 et d'éviter les bruits engendrés par les vibrations lors du déplacement du véhicule.

Après la réalisation du joint 11 par extrusion et de l'armature 14 ces deux composants sont assemblés en emboîtant la partie mâle de l'armature 14 dans le logement 16 de la seconde partie 13 du joint 11.

L'ensemble ainsi formé est fixé sur l'élément 2 en faisant pénétrer les organes d'encliquetage 15 dans les orifices 3 de ce second élément 2.

L'étanchéité entre les deux éléments 1 et 2 est obtenue par deux lignes de contact, respectivement A avec l'élément 1 et la ligne B avec l'élément 2.

Le dispositif d'étanchéité selon l'invention peut être monté par exemple entre les deux portes d'un véhicule automobile ou entre une porte et une aile adjacente ou encore entre un toit ouvrant et le pavillon du véhicule.

Le fait de réaliser le joint par extrusion et l'armature notamment par moulage permet d'éviter une surépaisseur de l'armature et par conséquent de permettre l'installation du dispositif d'étanchéité selon l'invention dans un espace réduit.

De plus, l'extrusion du joint présente l'avantage d'être une opération moins coûteuse et plus rapide que le moulage et permet également d'utiliser plusieurs types de caoutchouc pour ce joint ainsi que de pouvoir déposer un vernis sur la surface du joint en continu lors de l'extrusion.

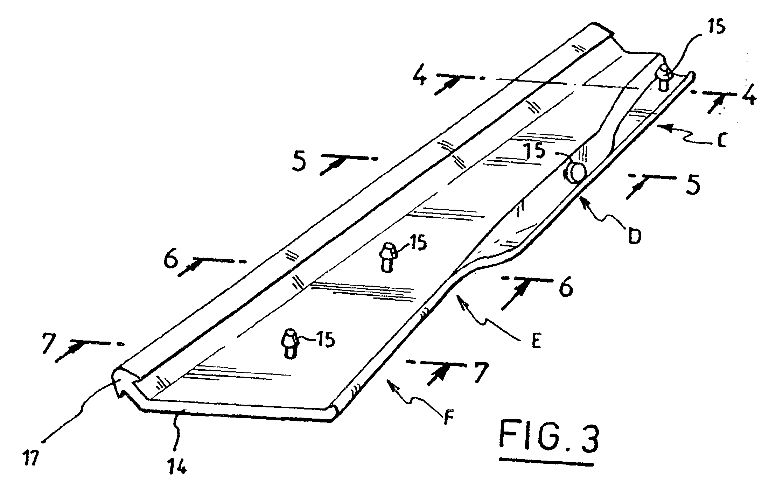

Enfin, le moulage de l'armature permet de pouvoir réaliser sur une même armature des portions de différentes dimensions en fonction du profil des éléments entre lesquels l'étanchéité doit être obtenue, comme représenté sur les figures 3 à 7

Sur ces figures, on a représenté uniquement l'armature 14 du dispositif d'étanchéité 10. Le joint 11 destiné à être emboîté sur la partie mâle 17 de l'armature 14 est identique au précédent mode de réalisation.

L'armature 14 présente, sur sa longueur, une succession de portions C, D, E et F de différentes dimensions et de sections variables en fonction du profil des éléments 1 et 2 entre lesquels l'étanchéité est à réaliser.

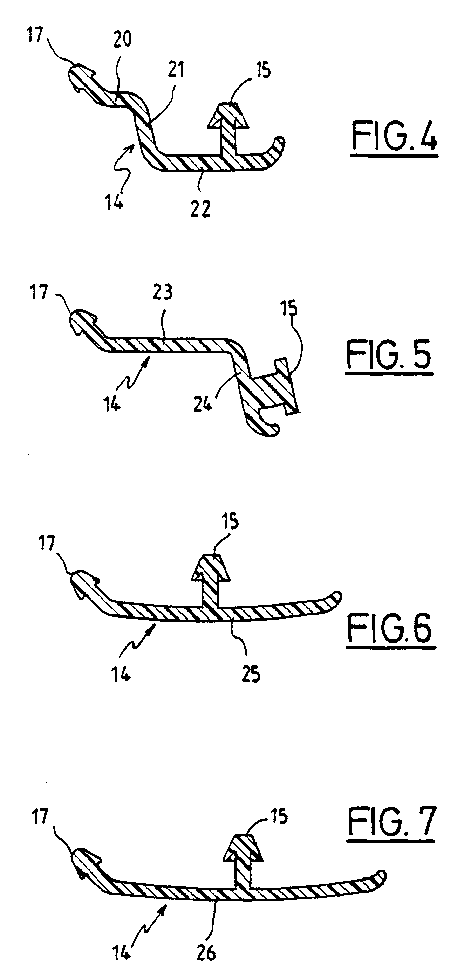

Ces différentes portions C, D, E et F sont représentées en coupe transversale sue les figures 4 à 7.

Ainsi que représenté sur la figure 4, la portion C de l'armature 14 est formée par une première partie 20 prolongeant la partie mâle 17, puis par une seconde partie 21 rabattue et formant un angle avec la première partie 20 et par une troisième partie 22 formant un angle avec la seconde partie 21 et s'étendant sensiblement parallèlement à la première partie 20.

Les moyens d'encliquetage 15 de l'armature 14 sur l'élément 2 sont disposés sur la troisième partie 22 de ladite armature 14.

La portion D de l'armature 14 représentée à la figure 5 est formée par une première partie 23 prolongeant la partie mâle 17 et par une seconde partie 24 rabattue et formant un angle avec la première partie 23.

Les moyens d'encliquetage 15 de l'armature 14 sur l'élément 2 sont, dans cette portion D, disposés sur la seconde partie 24.

Comme représenté à la figure 6, la portion E de l'armature 14 est formée uniquement par une partie 25 sensiblement plane et prolongeant la partie mâle 17.

De même et comme représenté à la figure 7, la portion F de l'armature 14 est formée uniquement par une partie 26 sensiblement plane de largeur plus grande que la partie 25 de la portion D.

Dans les portions E et F, les moyens d'encliquetage 15 sont disposés sur les parties 25 et 26.

Ainsi, l'armature 14 réalisée en matière plastique moulée ou en métal embouti ou encore en métal profilé présente des portions de différentes dimensions qui sont adaptées à la forme des éléments de la carrosserie du véhicule automobile au niveau desquels l'étanchéité doit être réalisée.

Le dispositif d'étanchéité conforme à l'invention est particulièrement bien adapté pour éliminer les bruits aérodynamiques notamment entre les portes latérales du véhicule et il permet également de cacher la tôle à l'intérieur de la porte quand celle-ci est ouverte

## Revendications

1. Dispositif d'étanchéité entre deux éléments (1, 2), notamment d'une carrosserie d'un véhicule automobile, comprenant un joint (11) en élastomère extrudé comportant une première partie (12) d'étanchéité entre les deux éléments (1, 2) et une seconde partie (13) d'accrochage sur une armature (14) destinée à être reliée à l'un desdits éléments (1, 2), caractérisé en ce que ladite armature (14) comporte, sur sa longeur, des portions de sections variables en fonction du profil des éléments (1, 2) entre lesquels l'étanchéité est à réaliser.

2. Dispositif selon la revendication 1, caractérisé en ce que l'armature (14) est en matière plastique moulée.

3. Dispositif selon la revendication 1, caractérisé en ce que l'armature (14) est en métal embouti.

4. Dispositif selon la revendication 1, caractérisé en ce que l'armature (14) est en métal profilé.

5. Dispositif selon l'une quelconque des revendications précédentes, caractérisé en ce que l'armature (14) comporte des moyens (15) de fixation sur l'élément (2) correspondant.

6. Dispositif selon la revendication 5, caractérisé en ce que les moyens de fixation sont formés par des organes d'encliquetage (15) venus de matière avec ladite armature (14) et coopérant avec des orifices (3) ménagés dans l'élément (2) correspondant.

7. Dispositif selon l'une quelconque des revendications 1 à 5, caractérisé en ce que l'armature (14) comporte, à chacune de ses extrémités, une butée (19) de maintien du joint (11).

8. Dispositif selon la revendication 1, caractérisé en ce que le joint (11) comporte des moyens d'emboîtement sur l'armature (14).

9. Dispositif selon la revendication 8, caractérisé en ce que les moyens d'emboîtement sont formés par un logement (16) ménagé dans la seconde partie (13) du joint (11) et coopérant avec une partie mâle (17) de forme complémentaire audit logement (16) et ménagée sur l'armature (14).

10. Dispositif selon la revendication 1, caractérisé en ce que le joint (11) comporte un rebord (18) en saillie assurant le contact avec l'élément (2) de support de ladite armature (14).

11. Dispositif selon la revendication 1, caractérisé en ce que le joint (11) est recouvert d'un vemis glissant.

12. Ouvrant de véhicule automobile, caractérisé en ce qu'il est équipé d'un dispositif d'étanchéité (10) suivant l'une quelconque des revendications précédentes.

## Patentansprüche

1. Dichtungsvorrichtung zwischen zwei Elementen (1, 2), insbesondere einer Kraftfahrzeugkarosserie, die eine stranggepreßte elastomere Dichtung (11) mit einem ersten Teil (12), der zwischen den beiden Elementen (1, 2) eine Dichtung schafft, und einem zweiten Teil (13), der an einer Stütze (14) angebracht ist, die dazu bestimmt ist, mit einem der Elemente (1, 2) verbunden zu werden, umfaßt, wobei die Stütze (14) auf ihrer Länge Abschnitte mit Querschnitten aufweist, die in Abhängigkeit vom Profil der Elemente (1, 2), zwischen denen die Dichtung geschaffen werden soll, veränderlich sind.

2. Vorrichtung nach Anspruch 1, dadurch gekennzeichnet, daß die Stütze (14) aus gepreßtem Kunststoff hergestellt ist.

3. Vorrichtung nach Anspruch 1, dadurch gekennzeichnet, daß die Stütze (14) aus gepreßtem Metall hergestellt ist.

4. Vorrichtung nach Anspruch 1, dadurch gekennzeichnet, daß die Stütze (14) aus Profilmetall hergestellt ist.

5. Vorrichtung nach einem der vorhergehenden Ansprüche, dadurch gekennzeichnet, daß die Stütze (14) Mittel (15) zur Befestigung an dem entsprechenden Element (2) umfaßt.

6. Vorrichtung nach Anspruch 5, dadurch gekennzeichnet, daß die Befestigungsmittel aus Einrastelementen (15) gebildet sind, die einteilig mit der Stütze (14) ausgebildet sind und mit Öffnungen (3) zusammenwirken, die im entsprechenden Element (2) ausgespart sind.

7. Vorrichtung nach einem der Ansprüche 1 bis 5, dadurch gekennzeichnet, daß die Stütze (14) an jedem ihrer Enden einen Anschlag (19) zum Halten der Dichtung (11) aufweist.

8. Vorrichtung nach Anspruch 1, dadurch gekennzeichnet, daß die Dichtung (11) Mittel zum Aufstecken auf die Stütze (14) umfaßt.

9. Vorrichtung nach Anspruch 8, dadurch gekennzeichnet, daß die Aufsteckmittel durch einen Aufnahmesitz (16) gebildet sind, der im zweiten Teil (13) der Dichtung (11) ausgespart ist und mit einem Steckerteil (17), das eine zum Aufnahmesitz (16) komplementäre Form besitzt und an der Stütze (14) ausgebildet ist, zusammenwirkt.

10. Vorrichtung nach Anspruch 10, dadurch gekennzeichnet, daß die Dichtung (11) eine vorstehende Kante (18) aufweist, die den Kontakt mit dem Halteelement (2) der Stütze (14) sicherstellt.

11. Vorrichtung nach Anspruch 1, dadurch gekennzeichnet, daß die Dichtung (11) mit einem Gleitlack überzogen ist.

12. Öffnung in einem Kraftfahrzeug, dadurch gekennzeichnet, daß sie mit einer Dichtungsvorrichtung (10) nach einem der vorhergehenden Ansprüche ausgerüstet ist.

## Claims

1. Sealing device between two elements (1, 2), particularly of an automobile body, comprising a gasket (11) made from extruded elastomer having a first part (12) for sealing between the two elements (1, 2) and a second part (13) for engagement on a reinforcement (14) intended to be connected to one of the two elements (1, 2), characterised in that the said reinforcement (14) has over its length portions having variable sections as a function of the profile of the elements (1, 2) between which the sealing is to be provided.

2. Device as claimed in Claim 1, characterised in that the reinforcement (14) is made from moulded plastic material.

3. Device as claimed in Claim 1, characterised in that the reinforcement (14) is made from stamped metal.

4. Device as claimed in Claim 1, characterised in that the reinforcement (14) is made from profiled metal.

5. Device as claimed in any one of the preceding claims, characterised in that the reinforcement (14) has means (15) for fixing on the corresponding element (2).

6. Device as claimed in Claim 5, characterised in that the fixing means are formed by snap connection elements (15) produced integrally with the said reinforcement (14) and co-operating with holes (3) provided in the corresponding element (2).

7. Device as claimed in any one of Claims 1 to 5, characterised in that the reinforcement (14) has at each of its ends a stop (19) for retaining the gasket (11).

8. Device as claimed in Claim 1, characterised in that the gasket (11) has means for fitting on the reinforcement (14).

9. Device as claimed in Claim 8, characterised in that the fitting means are formed by a recess (16) provided in the second part (13) of the gasket (11) and co-operating with a male part (17) having a shape complementary to the said recess (16) and provided on the reinforcement (14).

10. Device as claimed in Claim 1, characterised in that the gasket (11) has a projecting edge (18) which ensures the contact with the element (2) for supporting the said reinforcement (14).

11. Device as claimed in Claim 1, characterised in that the gasket (11) is covered with a lubricating varnish.

12. Opening of an automobile, characterised in that it is equipped with a sealing device (10) according to any one of the preceding claims.
